# EUROPEAN PATENT APPLICATION

(11) **EP 1 274 026 A1**
(43) Date of publication of application: **08.01.2003**
(21) Application number: 01202606.8
(22) Date of filing: 06.07.2001
(51) Int. Cl.: G06F 17/60

(54) **Method and system for automated marketing of attention area content**

(71) Applicant: Stichting Mathematisch Centrum, 1098 SJ Amsterdam (NL); Koninklijke KPN N.V., 9726 AE Groningen (NL)
(72) Inventor: Driesen, Cornelis Hendricus, 3411 EH Lopik (NL); Jonker, Joost, 5262 MP Vught (NL); Bomhof, Frederik Willem, 2253 VK Voorschoten (NL); La Poutré, Johannes Antonius, 1017 TR Amsterdam (NL); Bohte, Sander Marcel, 1097 CA Amsterdam (NL); Gerding, Enrico Harm, 1056 NR Amsterdam (NL)
(74) Representative: Wuyts, Koenraad Maria

(57) **Abstract**

System for automatic distribution of attention area content supplied by different suppliers (2) via a network (1) and a mediator (3) to different users (4). The mediator (3) comprises means (5) for distribution of an attention area content supplied by a preferred supplier, and accounting means (6) for recording a distribution price. The mediator also comprises means (7) for processing response data referring to responses of the users to the attention area content, as well as means (8) for transmitting the processed response data and the distribution price to the suppliers. Finally, the mediator comprises means (9) for (periodically) receiving, from the suppliers, a price bid for the distribution of a new attention area content, replacing the attention area content supplied by the preferred supplier, as well as means (10) for mutually comparing each received price bid and the actual distribution price and for selecting as new preferred supplier, the supplier offering the best price.

## Description

### BACKGROUND OF THE INVENTION

The invention relates to a method for automatic distribution of attention area content -screen banners, ads, icons etc.- to user interfaces -screens of PC's, TV sets, palmtops, mobile telephones etc.- via a transmission network -internet, TV distribution system, telephone network etc.-, said attention area content being supplied by different -competitive- attention area content suppliers -service or goods suppliers etc.- and distributed by an attention area content mediator to different users.

The field of present invention comprises electronic advertising etc. Generally known is that via internet etc. advertisement banners etc. may be distributed to the screens of PC's etc., used as user interfaces for web browsing etc. In many cases banners of different suppliers will follow one another. Prices and other conditions for displaying banners commonly are agreed in advance between the respective suppliers and the mediator.

### SUMMARY OF THE INVENTION

The present invention presents a method and a system offering the opportunity -by means of a mediator- for automatic and interactive negotiation on the price -hereinafter referred to as: conditions- for displaying ads, banners etc. -in general: attention area content on the users' screens. According to an aspect of the present invention, the mediator enables an auction process, preferably an automated auction process requesting to said attention area content suppliers to offer one or more bids for future distribution, via the mediator, of their respective attention area content, while the mediator selects one or more suppliers, based on a predetermined criterion, for example the best conditions. The present invention can be applied for attention area distribution, their number and size, and for attention area content distribution.

In a preferred embodiment of the invention, one user or group of users or a predetermined, preferably targeted group of users is included in the auction process. In a first step information about one user or a group of users is available to the mediator and at least part of the information is made available by the mediator to one or more suppliers. The information can be information such as stored information, information gathered through search queries or information available from the user profile. The suppliers, in a second step can then make a bid for allowance for displaying their content in an attention area for the one user or the group of users. Via an auction according to a predetermined criterion, such as the best price conditions, the best supplier are the best suppliers one selected for displaying the attention area content at the user interface. The auction can be for example a single bid auction (Vickery) or an ascending bid auction (English auction) or a descending auction (Dutch auction). The invention allows for instantaneously or after a predetermined period via an on-line, real-time process initializing or refreshing the attention area content on the user interface.

Preferably, the mediator collects and processes user information relative to said users and supplies said information to said attention area content suppliers. Said user information preferably comprises response data referring to responses of said users to said attention area content.

So, according to a preferred embodiment the mediator starts and completes a bid process with at least part of all (potential) banner suppliers, requesting them to make a bid for occupying a certain screen area with the supplier's own banner. In this way a (preferably) cyclic "auction" is initiated, in which in every cycle all suppliers are provided with the current reponse to the existing banner and the current price, and in which the suppliers are challenged to offer a higher bid, in order to achieve that their banner is displayed on the user screens. As a result of each auction step the mediator distributes to the users the banner of the supplier which offered the best price conditions. In this automated, continuous process, all suppliers are, once in each cycle, confronted with the user response to the displayed (competitive) banner and are requested to make a higher bid for the banner room, which could be used for their own banner.

When banners etc. are displayed on so-called personized user interfaces (pages, portals etc.) by which each user is enabled to set personal parameters relevant to the content or layout of the interface, the respons to the banners etc. may also comprise the user's personalization settings. This enables the mediator and the banner suppliers to discriminate in user classes. In that way different banner suppliers can be selected for different relevant user classes, for instance characterised by their common interest (in music, sport etc.). Part of those parameters may comprise the user's age or gender which items may be of interest for the suppliers too and in consequence may positively or negatively influence the offered bid price.

### EXEMPLARY EMBODIMENTS

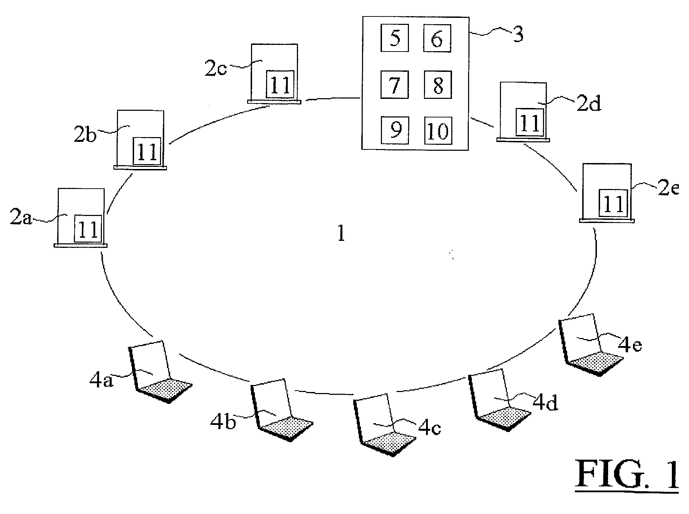

Figure 1 shows an exemplary embodiment of a system which is fit for implementation of the method according to the invention.

The system of figure 1 enables automatic distribution of attention area content -banners, advertisements etc.- via a transmission network 1. The attention area content are supplied by (servers of) different attention area content suppliers 2a...2e, distributed by an attention area content mediator 3 to (terminals of) different users 4a...4e.

Mediator 3 comprises distribution means 5, for the distribution of an attention area content supplied by a preferred supplier 2a to the users, and accounting means 6 for recording a distribution price (and quality), which price is billed to supplier 2a.

The mediator 3 also comprises processing means 7, for processing response data referring to responses of the users to the attention area content, as well as transmission means 8, for transmitting the processed response data and the distribution price to suppliers 2a...2e. Responses to the displayed banners etc. may be routed via mediator 3, which detects, counts and statistically processes, by means of the processing means 7, all responses of the users 4. As an alternative, responses to the banners may be received by the actual supplier 2a and forwarded regularly to the processing means 7 of mediator 3, to be processed. The transmission means 8 transmit the processed response data, as well as the distribution price to the suppliers 2a...2e. The supplier servers 2a...2e each comprise a processor 11 controlled by a bidding algorithm, set by the supplier, which is fit to compute a price, based on the received response data, to be offered to the mediator 3 for hiring the attention area content on the users' screens. Mediator 3 comprises receiving means 9, for receiving, from the suppliers 2a...2e their respective price bids for the distribution of a new attention area content, replacing the attention area content supplied by the preferred supplier at that moment. Mediator 3, moreover, comprises means 10 for mutually comparing all received price bids and the actual distribution price at that moment, and for selecting as new preferred supplier, the supplier, for instance supplier 2d, offering the best (highest) price.

The distribution means 5 distribute to the users 4 the new attention area content supplied by the new preferred supplier 2d, while the accounting means 6 record the best price on the account of the new preferred supplier 2d.

Summarizing, the shown exemplary system executes the following steps:
a. Mediator 3 distributes an attention area content supplied by a preferred supplier 2a to the users 4, employing a distribution price and quality; this initial step is optional.
b. Mediator 3 collects and processes user information (user data) like response data, referring to responses of said users to said attention area content.
c. Mediator 3 transmits said processed user data and the actual distribution price to the suppliers 2.
d. The suppliers 2 transmit to mediator 3 a bid (price, quality items) for future distribution of a new attention area content, replacing said attention area content supplied by the supplier at that moment.
e. Mediator 3 mutually compares each bid and the actual distribution conditions (price, quality) and selects the supplier offering the best conditions as new preferred supplier 2d.
f. Mediator 3 distributes the new attention area content supplied by the new preferred supplier 2d, to the users 4, employing the new conditions.
g. The auction process is continued from step b.

The users 4a...4e may set the performance of their interface by means of user personalisation parameters. In that case, the processing means 7 for processing the response data may be enabled to process at least part of the personalisation parameters, which can be transmitted from the user's device 4 to the mediator 3, together with the user's response data. By doing so the transmission means 8 transmit the processed response data -including the respective user data- together with the distribution price to the suppliers 2a...2e. The supplier servers 2a...2e each compute and bid a price, based on the received response data including the processed personal user data ("user profile"). This option enables also the possibility to bring out different bids for different groups of users, based upon their user profiles. When, for instance, users 4a, 4c en 4d have profiles -represented by their personal parameters- which are very interesting for suppliers 2b and 2c, those suppliers will compute a higher bid for hiring attention room on the screens of the user group 4a, 4c en 4d, while other suppliers are more interested in other groups of users. Module 10 of mediator 3 may thus be constructed that, simultaneously, different bids can be granted to different suppliers, distribution means 5 being constructed thus that different groups of users, grouped matching personal parameters, will be served by always the most interested -and most bidding- supplier.

## Claims

1. Method for automatic distribution of attention area content to a user interface via a transmission network, said attention area content being supplied by different attention area content suppliers and distributed by an attention area content mediator to one or more users, **CHARACTERIZED IN THAT** the mediator enables an auction process, requesting to said attention area content suppliers to offer one or more bids for future distribution, via the mediator, of their respective attention area content, while the mediator selects one or more suppliers, based on a predetermined criterion.

2. The method according to claim 1 wherein said process is an automated process and wherein said predetermined criterion includes an evaluation of the best conditions.

3. The method according to claim 1 wherein the auction process occurs in real-time and continously can initialize or refresh the user interface with another or additional attention area content.

4. The method according to claim 1 wherein the bids are based on information about the user.

5. Method according to claim 1, **CHARACTERIZED IN THAT** the mediator collects and processes user information relative to said users and supplies said information to said attention area content suppliers.

6. Method according to claim 5, **CHARACTERIZED IN THAT** said user information comprises response data referring to responses of said users to said attention area content.

7. Method according to claim 5, at least part of said users setting their respective interface by means of personalisation parameters, **CHARACTERIZED IN that** said user information comprises at least part of said personalisation parameters.

8. Method according to claim 1, **CHARACTERIZED IN THAT** said conditions comprise a bid price.

9. Method according to claim 1, **CHARACTERIZED IN THAT** said conditions comprise one or more quality indicators.

10. Method according to claim 1, **CHARACTERIZED IN THAT** said auction process is a cyclically repeated process.

11. System for automatic distribution of attention area content to user interfaces via a transmission network (1), said attention area content being supplied by different attention area content suppliers (2) and distributed by an attention area content mediator (3) to different users (4), **CHARACTERIZED IN that**
said mediator (3) comprises means (5) for the distribution of an attention area content supplied by a preferred supplier to said users, and accounting means (6) for recording a distribution condition;
said mediator comprising means (7) for processing user information referring to said users, as well as means (8) for transmitting said user information and said distribution conditions to the suppliers;
said mediator comprising means (9) for receiving, from said suppliers a condition bid for the distribution of a new attention area content, replacing said attention area content supplied by the preferred supplier, as well as means (10) for mutually comparing each received condition bid and the actual distribution condition and for selecting as new preferred supplier, the supplier offering the best condition according to a predetermined criterion;
said distribution means (5) distributing to said users the new attention area content supplied by said new preferred supplier and said accounting means (6) recording said best condition on the account of said new preferred supplier.

12. System according to claim 8, at least part of the users comprising means for setting their respective interface by means of personalisation parameters, **CHARACTERIZED IN that** said means (7) for processing said user information are enabled to process at least part of said personalisation parameters.

13. A mediator system compiled on a computer environment and being arranged for distributing information to users, said mediator system enabling an auction process, requesting attention and suppliers to offer one or more bids for future distribution of their respective attention area content and wherein the mediator select one or more suppliers based on a predetermined criterion.
